# EUROPÄISCHE PATENTANMELDUNG

(11) **EP 2 487 430 A1**
(43) Veröffentlichungstag der Anmeldung: **15.08.2012**
(21) Anmeldenummer: 12000066.6
(22) Anmeldetag: 07.01.2012
(51) Int. Cl.: F24F 12/00

(54) **Kreislaufverbundsystem zur Wärmerückgewinnung**

(30) Priorität: 09.02.2011 DE 102011010731
(71) Anmelder: GEA Air Treatment GmbH, 44625 Herne (DE)
(72) Erfinder: Steinhoff, Norbert, 45883 Gelsenkirchen (DE); Westerdorf, Thomas, 44805 Bochum (DE)
(74) Vertreter: Cohausz Hannig Borkowski Wißgott

(57) **Zusammenfassung**

Die Erfindung betrifft ein Kreislaufverbundsystem zur Wärmerückgewinnung aus der Abluft eines Gebäudes, mit mindestens einem Wärmetauscher (Abluft-Wärmetauscher), der von der Abluft durchströmt ist und die Abluftwärme auf einen Flüssigkeitskreislauf überträgt, in dem mindestens zwei weitere Wärmetauscher (Außenluft-Wärmetauscher) angeordnet sind, die nacheinander von der in das Gebäude dringenden Außenluft durchströmt sind, um diese zu erwärmen, wobei der Flüssigkeitskreislauf eine gesteuerte oder geregelte Bypassleitung aufweist, die den von der Außenluft zuerst durchströmten Wärmetauscher überbrückt.

## Beschreibung

Die Erfindung betrifft ein Kreislaufverbundsystem zur Wärmerückgewinnung aus der Abluft eines Gebäudes, mit mindestens einem Wärmetauscher (Abluft-Wärmetauscher), der von der Abluft durchströmt ist und die Abluftwärme auf einen Flüssigkeitskreislauf überträgt, in dem mindestens zwei weitere Wärmetauscher (Außenluft-Wärmetauscher) angeordnet sind, die nacheinander von der in das Gebäude dringenden Außenluft durchströmt sind, um diese zu erwärmen.

In der Lüftungstechnik werden häufig Kreislaufverbundsysteme zur Wärmerückgewinnung eingesetzt. Hierbei wird die im Abluftstrom enthaltene Wärme in mindestens einem Lamellenwärmetauscher auf einen Wasserstrom übertragen. Der Abluftstrom wird dadurch abgekühlt und abgeführt. Um den Wasserstrom vor Vereisung zu schützen, ist ihm ein Frostschutzmittel zugesetzt.

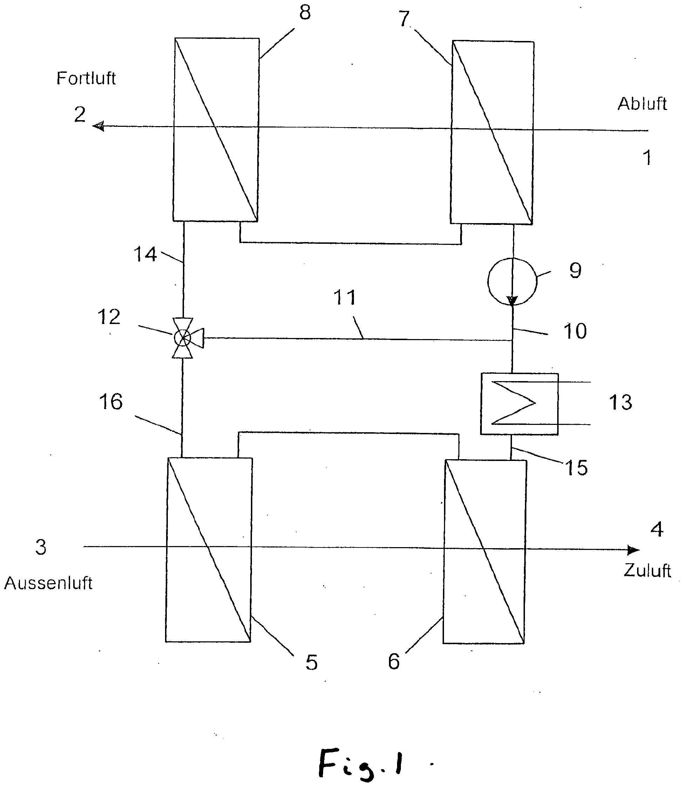

Bei geringen Außenlufttemperaturen wird der Wasserstrom in den Außenluft-Wärmetauschern soweit abgekühlt, dass es den Wärmetauscher mit einer Temperatur unter 0°C verlässt. Dies kann im Abluft-Wärmetauscher zur luftseitigen Vereisung des anfallenden Kondensats führen. Um dies zu verhindern, wird, wie in Fig. 1 dargestellt, der Wasserstrom vor Eintritt in den Abluftwärmetauscher durch Beimischung warmen Mediums soweit erwärmt, dass eine Vereisung vermieden wird. Dies geschieht durch eine an den Flüssigkeitskreislauf vor den Außenluft-Wärmetauschern angeschlossene Verbindungsleitung und ein Regelventil. Dies hat jedoch zur Folge, dass der Wasserstrom durch die Außenluft-Wärmetauscher reduziert wird. Um die Zuluft auf die gewünschte Temperatur zu erwärmen, muss dem Wasserstrom zusätzlich Wärme von außen zugeführt werden (Wärmetauscher), um auf eine höhere Temperatur erwärmt zu werden, als dies ohne Reduzierung des Wasserstroms in der Leitung zwischen dem Abluft-Wärmetauscher und den Außenluft-Wärmetauscher aufgrund der Beimischung erforderlich wäre. Die Nutzung von Niedertemperaturwärme als Wärmequelle für die zusätzliche Wärme ist deshalb nicht möglich.

Ein weiterer Nachteil bestehender Technologien ist, dass die Vereisungsschutzfunktion vorsorglich und nicht den tatsächlichen Gegebenheiten entsprechend aktiviert wird. Hierbei wird das Regelventil in Fig. 1 so geregelt, dass die Wassereintrittstemperatur des in die Abluft-Wärmetauscher gelangenden Wassers oberhalb von 0°C gehalten wird oder aber die Temperatur der Fortluft oberhalb einer für das Vereisen kritischen Temperatur gehalten wird. Hierdurch wird die Effizienz der Wärmerückgewinnung auch in den Fällen reduziert, in denen aufgrund eines geringen Feuchtigkeitsgehaltes der Abluft kein Vereisungsrisiko gegeben ist.

Aufgabe der Erfindung ist es, einen zuverlässigen Vereisungsschutz zu erreichen, indem der Wasserstrom vor Eintritt in den Abluft-Wärmetauscher ausreichend erwärmt wird und den Wasserstrom in zumindest einem der Außenluft-Wärmetauscher ausreichend hoch zu halten, so dass ein Zuführen zusätzlicher Wärme von außen nicht oder kaum erforderlich ist. Auch ist es Aufgabe der Erfindung, die Vereisungsfunktion nur dann zu aktivieren, wenn tatsächlich ein Vereisungsrisiko besteht oder eine Vereisung eingetreten ist, um eine maximale Effizienz der Wärmerückgewinnung zu erreichen.

Diese Aufgaben werden erfindungsgemäß dadurch gelöst, dass der Flüssigkeitskreislauf eine gesteuerte oder geregelte Bypassleitung aufweist, die den von der Außenluft zuerst durchströmten Wärmetauscher überbrückt.

Die bekannte Verbindungsleitung entfällt und ist durch eine Bypassleitung ersetzt, die ausschließlich den in Luftrichtung gesehen ersten Außenluft-Wärmetauscher umfährt. Der Wasserstrom durch den in Luftrichtung gesehenen zweiten Außenluft-Wärmetauscher bleibt dadurch auch im Frostschutzbetrieb in voller Höhe erhalten.

Damit ist es möglich, mit geringeren Temperaturen eine ausreichende Zulufttemperatur zu erreichen. Somit kann auch die von außen zugeführte Wärme auf niedrigerem Niveau gefahren werden.

Vorzugsweise wird vorgeschlagen, dass die Bypassleitung in die Flüssigkeitskreislaufleitung in dem Bereich mündet, der den von der Außenluft zuerst durchströmten Wärmetauscher mit dem oder den Abluft-Wärmetauschern verbindet, und dort ein steuerbares oder regelbares Ventil aufweist, das die Menge bestimmt, die durch die Bypassleitung strömt.

Ein besonders vorteilhaftes Regelungsverfahren besteht darin, dass der Durchfluss durch die Bypassleitung in Abhängigkeit von der Temperatur und/oder der Feuchtigkeit der Abluft geregelt wird. Zusätzlich oder alternativ wird vorgeschlagen, dass der Durchfluss durch die Bypassleitung in Abhängigkeit der durch eine Vereisung erzeugten Druckverluste des Abluftstroms über den oder die Abluft-Wärmetauscher geregelt wird.

Ausführungsbeispiele der Erfindung werden im Folgenden näher beschrieben. Es zeigen
- Fig. 1: eine grafische Darstellung eines Kreislaufverbundsystems nach dem Stand der Technik,
- Fig. 2: eine grafische Darstellung eines Kreislaufverbundsystems nach der Erfindung.

Kreislaufverbundsysteme bestehen aus mindestens einem Luft/Wasser Lamellenwärmetauscher 5, 6 im Außen/Zuluftstrang 3, 4 der Lüftungsanlage, mindestens einem Luft/Wasser Lamellenwärmetauscher 7, 8 im Ab/Fortluftstrang 1, 2 der Lüftungsanlage, einer Pumpe 9 zur Förderung des Wasserstroms und einem Rohrsystem 10 zum Transport des Wärmeträgers. Das erwärmte Wasser wird über eine Verrohrung 10 und die Pumpe 9 durch mindestens einen Lamellenwärmetauscher 5, 6 im Außen/Zuluftstrang 3, 4 geleitet. Es gibt seine Wärme an die Außenluft 3 ab und verlässt das System erwärmt als Zuluft 4.

Um die Zuluft auf die gewünschte Einblastemperatur zu erwärmen, kann zusätzliche Wärme in den Wasserkreislauf eingespeist werden. Dies erfolgt vorzugsweise durch einen Wasser/Wasser Wärmetauscher 13.

Die Arbeitsweise wird an folgenden Beispielen deutlich:
Außenluft mit einer Temperatur von -14°C soll auf eine Zulufttemperatur von 22°C erwärmt werden. Es steht Abluft mit einer Temperatur von 22°C zur Verfügung. Der Wasserstrom wird in den ausreichend groß dimensionierten Lamellenwärmetauschern 7, 8 auf eine Temperatur von 19°C erwärmt. Eine weitere Erwärmung des Wasserstroms erfolgt nach Bedarf im Wärmetauscher 13. Die Lamellenwärmetauscher 5, 6 übertragen die Wärme des Wasserstroms auf den Außenluftstrom 3, der sich auf die gewünschte Zulufttemperatur 4 von 22°C erwärmt.

Bei dem bekannten Kreislaufverbundsystem nach Fig. 1 ergeben sich folgende Zustände: Der Wasserstrom kühlt sich an Punkt 16 auf -11°C ab. Würde dieser Wasserstrom in den Wärmetauscher 8 geleitet, würde dies dort zu einer luftseitigen Vereisung führen. Daher werden ca. 35 % des Wasserstroms 10 über die Bypassleitung 11 an den Lamellenwärmetauschern 5, 6 und dem Wärmetauscher 13 vorbeigeführt und dem Wasserstrom 16 beigemischt, so dass die Mischtemperatur 14 bei 0°C liegt und eine Vereisung vermieden wird. Um mit dem um 35 % reduzierten Wasserstrom 15 die gewünschte Erwärmung der Zuluft zu erreichen, muss dieser Wasserstrom im Wärmetauscher 13 auf ca. 45°C erwärmt werden.

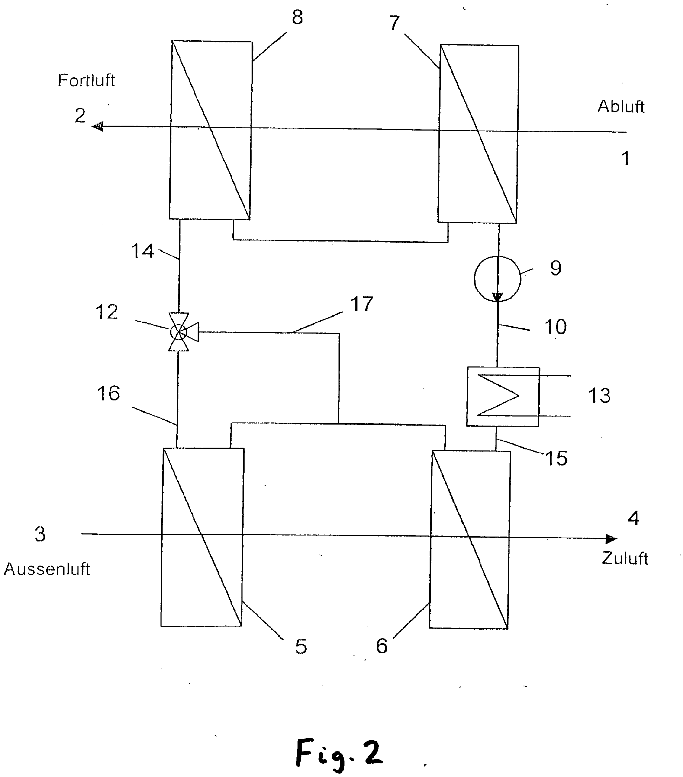

Bei dem erfindungsgemäßen Kreislaufverbundsystem nach Fig. 2 ergeben sich folgende Zustände:
Der nach Austritt aus den abluftseitigen Lamellenwärmetauschern 7, 8 auf ca. 18°C vorgewärmte Wasserstrom 10 wird im Wärmetauscher 13 auf ca. 30°C nacherwärmt. Diese Temperatur in Punkt 15 genügt, um eine Zulufttemperatur 4 von 22°C zu erreichen. Der Wasserstrom kühlt sich dadurch auf ca. 5°C ab. Eine weitere Abkühlung erfolgt im Wärmetauscher 5, so dass nach Beimischung über den Bypass 17 im Mischventil 12 in 14 sich eine Temperatur von 0°C einstellt.

Das Beispiel zeigt, dass die Wassertemperatur in 15 von 45°C auf 30°C gesenkt werden konnte, was die Einspeisung von Niedertemperaturwärme erlaubt. Die Begrenzung der Vereisungsschutzfunktion auf die Betriebszustände, in denen tatsächlich ein Vereisungsrisiko besteht, wird durch zwei alternative oder sich ergänzende Verfahren gelöst: Die Temperatur und der Feuchtigkeitsgehalt der Abluft 1 werden gemessen und daraus die Taupunkttemperatur bestimmt. Liegt die Taupunkttemperatur oberhalb von 0°C, wird die Wassertemperatur 14 über das Ventil 12 auf einen minimalen Wert begrenzt der größer ist als 0°C. Ist diese Taupunkttemperatur kleiner als 0°C wird die Wassertemperatur 14 über das Regelventil 12 auf einen minimalen Wert begrenzt, der größer ist als die Tautemperatur. Auf diese Weise wird im ersten Fall (Taupunkttemperatur >=0) ein Kondensatausfall aus der Abluft 1 ermöglicht, ein Einfrieren des Kondensats aber durch das Temperaturniveau verhindert, während im zweiten Fall (Tautemperatur <0°C) ein Kondensatausfall verhindert wird. Dieses Verfahren, das ein Einfrieren des Kondensats grundsätzlich ausschließt, wird vorzugsweise durch ein zweites Verfahren zur Erhöhung der Betriebssicherheit ergänzt oder aber alternativ ersetzt.

Das zweite Verfahren lässt ein teilweises Vereisen des abfallenden Kondensats zu, ermittelt den Vereisungsgrad und taut das Kondensat bei Überschreiten eines Grenzwertes wieder ab. Hierzu werden die vom Abluftstrom 1 verursachten Druckverluste der Wärmetauscher 7 und 8 kontinuierlich erfasst und verglichen. Bei nicht vereistem Wärmetauscher stehen diese Druckverluste in einem definierten Verhältnis, das durch die äußere"Geometrie der Wärmetauscher, die bei den Wärmetauschern unterschiedlich sein kann, gegeben ist. Da eine mögliche Vereisung des aus dem Abluftstrom 1 ausfallenden Kondensats im kältesten Bereich der Wärmetauscher beginnt und sich dieser im Wärmetauscher 8 befindet, erhöht sich der Druckverlust dieses Wärmetauschers 8 und das Verhältnis der Druckverluste ändert sich im Vergleich zum nicht vereisten Zustand. Übersteigt das Verhältnis der Druckverluste einen einstellbaren Grenzwert, wird die Temperatur des Wassers 14 über das Ventil 12 auf einen Wert oberhalb von 0°C geregelt und so der Wärmetauscher abgetaut. Die Abtauphase wird beendet, wenn das Verhältnis der Druckverluste wieder den ursprünglichen Wert ohne Vereisung erreicht hat.

Die Abluft-Wärmetauscher 7, 8 und Außenluft-Wärmetauscher 5, 6 sind Wasser/Luft-Wärmetauscher vorzugsweise Lamellen-Gegenstromwärmetauscher. Hierbei kann im Flüssigkeitskreislauf statt Wasser auch eine andere Flüssigkeit gewählt werden.

## Patentansprüche

1. Kreislaufverbundsystem zur Wärmerückgewinnung aus der Abluft (1) eines Gebäudes, mit mindestens einem Wärmetauscher (Abluft-Wärmetauscher) (7), der von der Abluft (1) durchströmt ist und die Abluftwärme auf einen Flüssigkeitskreislauf überträgt, in dem mindestens zwei weitere Wärmetauscher (Außenluft-Wärmetauscher) (5, 6) angeordnet sind, die nacheinander von der in das Gebäude dringenden Außenluft (3) durchströmt sind, um diese zu erwärmen, **dadurch gekennzeichnet, dass** der Flüssigkeitskreislauf eine gesteuerte oder geregelte Bypassleitung (17) aufweist, die den von der Außenluft (3) zuerst durchströmten Wärmetauscher (5) überbrückt.

2. Kreislaufverbundsystem nach Anspruch 1, **dadurch**
**gekennzeichnet , dass** die Bypassleitung (17) in die Flüssigkeitskreislaufleitung (14, 16) in dem Bereich mündet, der den von der Außenluft (3) zuerst durchströmten Wärmetauscher (5) mit dem oder den Abluft-Wärmetauschern (7, 8) verbindet, und dort ein steuerbares oder regelbares Ventil (12) aufweist, das die Menge bestimmt, die durch die Bypassleitung (17) strömt.

3. Verfahren zum Regeln eines Kreislaufverbundsystems nach Anspruch 1 oder 2, **dadurch gekennzeichnet, dass** der Durchfluss durch die Bypassleitung (17) in Abhängigkeit von der Temperatur und/oder der Feuchtigkeit der Abluft (1) geregelt wird.

4. Verfahren zum Regeln eines Kreislaufverbundsystems nach Anspruch 1 oder 2, **dadurch gekennzeichnet, dass** der Durchfluss durch die Bypassleitung (17) in Abhängigkeit der durch eine Vereisung erzeugten Druckverluste des Abluftstroms über den oder die Abluft-Wärmetauscher (7, 8) geregelt wird.
